# EUROPEAN PATENT APPLICATION

(11) **EP 4 064 408 A1**
(43) Date of publication of application: **28.09.2022**
(21) Application number: 21305354.9
(22) Date of filing: 23.03.2021
(51) Int. Cl.: H01M 10/0569, H01M 10/0567, H01M 10/054, H01M 10/42, H01M 10/0568

(54) **ELECTROLYTE COMPOSITION FOR SODIUM-ION BATTERY**

(71) Applicant: Centre national de la recherche scientifique, 75016 Paris (FR); College de France, 75231 Paris Cedex 05 (FR); Sorbonne Université, 75006 Paris (FR)
(72) Inventor: MARIYAPPAN, Sathiya, 75013 Paris (FR); TARASCON, Jean-Marie, 75014 Paris (FR); HIJAZI, Hussein, 75231 Cedex 05 Paris (FR)
(74) Representative: LLR

(57) **Abstract**

The invention relates to an electrolyte composition comprising at least one sodium salt dissolved in a solvent and a combination of additives, wherein:
- said solvent comprises at least one compound selected from the group consisting of ethylene carbonate, dimethyl carbonate, ethyl methyl carbonate, diethyl carbonate, propylene carbonate, ethyl acetate, ethyl propionate, methyl propionate, 4-fluorotoluene, 1,1,2,2-tetrafluoroethyl 2,2,3,3-tetrafluoropropyl ether, di-fluoro ethylene carbonate, ethyl difluoroacetate and diglyme, and
- the combination of additives comprises at least tris(trimethylsilyl)phosphite (TMSPi) and succinonitrile (SN).

The invention also relates to the use of the said electrolyte composition in a Na-ion battery, and a Na-ion battery comprising the same.

## Description

The invention relates to an electrolyte composition for sodium-ion battery, and uses thereof as a non-aqueous liquid electrolyte in a sodium-ion battery.

The sodium-ion (Na-ion) technology is a promising alternative candidate for next-generation batteries, especially in the stationary energy storage field due to the high natural abundance and low cost of sodium as compared to lithium. This has led over the last decade to a blooming research on various components of sodium-ion batteries developing new and superior electrode materials for optimized Na-ion battery systems. Two types of technology based either on polyanionic, e.g. Na₃V₂(PO₄)₂F₃ or layered e.g. O3 NaNi_{0.5}Mn_{0.5}O₂ and P2 Na_{0.67}Mn_{0.5}Fe_{0.5}O₂ compounds have emerged, with the former being the most performing in terms of power rate, cycle life and specific energy.

However, for practical applications, other features, such as operation at different temperatures/ climatic conditions, safety, self-discharge and durability that strongly depend on the nature and stability of interphases namely solid electrolyte interphase (SEI) and cathode electrolyte interphase (CEI) must be satisfied. This called for an intensive research on the nature of the electrolyte used. At the early stage, researchers naively believe that simple extrapolation of what has been used for the Li-ion technology could be used just by changing the Li-salt to sodium salt. But this was without counting that the solubility of Na-based organic/ inorganic products that compose the Na-derived SEI/ CEI, is different compared with those of Li-counterparts owing to the milder acidity of Na⁺ as compared to Li⁺.

In light of such remarks, the inventors experienced that Na₃\/₂(PO₄)₂F₃/ hard carbon (C) cells based on classical mixtures of ethylene carbonate (EC), propylene carbonate (PC) and dimethyl carbonate (DMC) with a 1 mol/L NaPF₆ electrolytes were performing exceedingly well at room temperature, but were showing bad performances at 55°C in terms of cycling and self-discharge.

One solution developed by the inventors was to implement a specific electrolyte based on a mixture of EC-PC and NaPF₆ to which was added a few additives: sodium difluoro(oxalato)borate (NaODFB), succinonitrile N≡C-(CH₂)₂-C≡N (SN), 1,3-propane sultone (PS), and vinylene carbonate (VC).

However, this electrolyte has some drawbacks, such as its inability to be used with commercial polyolefin separators because of a poor wettability, high viscosity and the decrease of the cell power capability (high resistance SEI).

With the aim to wet the commercial polyolefin separators, the inventors implemented another specific electrolyte based on ethylene carbonate (EC) and dimethyl carbonate (DMC) with a 1 mol/L NaPF₆ to which the following additives were added: NaODFB, VC and Tris(trimethylsilyl)phosphite (TMSPi).

However, when used in commercial cells, it was observed a continuous raise in cell pressure upon cycling leading to the circuit interrupt device (CID) of the cell to break and to cell failure.

The aim of the invention is to obviate these drawbacks.

The purpose of the invention is to provide an electrolyte composition for Na-ion battery which exhibits better performance in terms of power rate, cycle life and specific energy, while keeping good wettability properties and triggering a reduced pressure formation.

Thus, the invention relates to an electrolyte composition comprising at least one sodium salt dissolved in a solvent and a combination of additives, wherein:
- said solvent at least comprises a component selected from the group consisting of ethylene carbonate, dimethyl carbonate, ethyl methyl carbonate, diethyl carbonate, propylene carbonate, ethyl acetate, ethyl propionate, methyl propionate, 4-fluorotoluene, 1,1,2,2-tetrafluoroethyl 2,2,3,3-tetrafluoropropyl ether, di-fluoro ethylene carbonate, ethyl difluoroacetate and diglyme, and
- the combination of additives comprises at least tris(trimethylsilyl)phosphite (TMSPi) and succinonitrile (SN).

The inventors unexpectedly found that combining succinonitrile helps in protecting the positive electrode by forming stable CEI and reduce the oxidation of electrolyte solvent, thereby reduce the formation of gaseous bi-products to overcome the raising pressure issue upon cycling. Furthermore, the electrolyte composition of the invention shows better performance in terms of power rate, cycle life and/or specific energy, while keeping good wettability properties.

According to an embodiment of the invention, the amount of TMSPi ranges from 0.05 to 10 wt%, based on the total weight of the sodium salt and the solvent. Notably, the amount of TMSPi may range from 0.05 to 5 wt%, preferably from 0.1 to 1 wt%, and even more preferably the amount of TMSPi is around 0.2 wt%, again based on the total weight of the sodium salt and the solvent.

It is believed, without wishing to be limited by such finding, that the succinonitrile contributes to the passivation of the positive electrode either by the formation of a monolayer of chemisorbed nitrile molecules on the transition metal oxide surface or by an oxidative decomposition.

According to an embodiment of the invention, the amount of succinonitrile ranges from 0.1 to 5 wt%, based on the total weight of the sodium salt and the solvent. Notably, the amount of succinonitrile may range from 1 to 5 wt%, preferably from 2 to 4 wt%, and more preferably the amount of succinonitrile may be around 3 wt%, again based on the total weight of the sodium salt and the solvent.

According to an embodiment of the invention, the combination of additives further comprises at least one additional additive chosen in a group which comprises or consists of vinylene carbonate, vinylethylene carbonate and difluoro(oxalato)borate (NaODFB) and mixture thereof.

NaODFB is a film-forming additive that undergoes reductive decomposition on the negative electrode leading to its passivation. It is believed that the decomposition products of NaODFB efficiently contribute to the SEI composition and provide protection against parasitic reactions on the negative electrode.

The amount of NaODFB may range from 0.05 to 10 wt%, based on the total weight of the sodium salt and the solvent. Preferably, the amount of NaODFB ranges from 0.05 to 5 wt%, and in particular may range from 0.05 to 1 wt%, based on the total weight of the sodium salt and the solvent. An amount of NaODFB around 0.5 wt%, based on the total weight of the sodium salt and the solvent, is particularly preferred.

The addition of vinylene carbonate to the electrolyte composition of the invention may further enhance the electrolyte performance due to the synergetic effect between vinylene carbonate and TMSPi. Besides, vinylene carbonate can help to minimize the degradation of DMC via the formation of an elastomer, and limiting the amount of soluble species moving to the positive electrode.

Especially, the amount of vinylene carbonate and/or the amount of vinylethylene carbonate each ranges from 0.1 to 10 wt%, based on the total weight of the sodium salt and the solvent. Notably, the amount of vinylene carbonate and/or the amount of vinylethylene carbonate ranges from 1 to 5 wt%, based on the total weight of the sodium salt and the solvent. In particular, the amount of vinylene carbonate and/or the amount of vinylethylene carbonate each ranges from 2 to 5 wt%, based on the total weight of the sodium salt and the solvent. Even more, the amount of vinylene carbonate and/or the amount of vinylethylene carbonate each is 3 wt%, based on the total weight of the sodium salt and the solvent.

According to a particular embodiment of the invention, the combination of additives comprises TMSPi, SN, NaODFB and vinylene carbonate.

According to an embodiment of the invention, the solvent is a mixture of at least a first and a second compounds, said first compound being ethylene carbonate and said second compound being selected from the group consisting of dimethyl carbonate, ethyl methyl carbonate, diethyl carbonate, propylene carbonate, ethyl propionate, diglyme and 1,1,2,2-tetrafluoroethyl 2,2,3,3-tetrafluoropropyl ether.

Especially, the second compound is selected from the group consisting of dimethyl carbonate, ethyl methyl carbonate, diethyl carbonate and propylene carbonate. In particular, the second compound is dimethyl carbonate or propylene carbonate.

The volume ratio of the first compound to the second compound may range from 1:20 to 20:1, especially from 1:9 to 5:1. In particular, the volume ratio is around 1:1.

In a particular embodiment, the mixture of at least two compounds is a mixture of ethylene carbonate and propylene carbonate, preferably in a volume ratio of 1:1.

Preferably, the solvent further comprises a third compound selected from the group consisting of dimethyl carbonate, ethyl methyl carbonate, diethyl carbonate, propylene carbonate, ethyl propionate, diglyme and 1,1,2,2-tetrafluoroethyl 2,2,3,3-tetrafluoropropyl ether.

In particular, said third compound is selected from the group consisting of dimethyl carbonate, ethyl methyl carbonate, diglyme and diethyl carbonate.

The volume ratio of the first compound and second compound to the third solvent may range from 1: 1:1 to 1:1:20. In particular the first, second and third compounds are mixed according to a volume ratio of 1:1:1, 1:1:8 or 1:1:2.

In another embodiment of the invention, the solvent is mixture of linear and cyclic carbonates. Preferably, the solvent is a mixture of at least a first and a second compositions, said first composition being ethylene carbonate and/or propylene carbonate, and said second composition being selected from the group consisting of dimethyl carbonate, ethyl methyl carbonate, diethyl carbonate, ethyl propionate, diglyme, 1,1,2,2-tetrafluoroethyl 2,2,3,3-tetrafluoropropyl ether and mixture thereof.

In particular, the second composition is selected in the group consisting of dimethyl carbonate, ethyl methyl carbonate, diethyl carbonate, ethyl propionate and diglyme.

In a preferred embodiment, the first composition is a mixture of ethylene carbonate and propylene carbonate. In that case, the volume ratio of ethylene carbonate to propylene carbonate is preferably 1:1.

The volume ratio of the first composition to the second composition may range from 1:20 to 5:1, with preference from 1:20 to 1:1. Preferably, the volume of the second composition (linear carbonate(s)) is higher than the one of the first composition (cyclic carbonate(s)) in order to reduce the viscosity of the electrolyte composition.

The sodium salt may be chosen among the salts commonly used in non-aqueous electrolyte suited for Na-ion batteries. As examples of sodium salt, one can mention sodium hexafluorophosphate (NaPF₆), sodium perchlorate (NaClO₄), sodium bis (fluorosulfonyl) imide (NaFSI), sodium bis(trifluoromethanesulfonyl)imide (NaTFSI), sodium bis(pentafluoroethanesulfonyl)imide (NaBETI), sodium tetrafluoroborate (NaBF₄), and one of their mixture.

In particular, the sodium salt is NaPF₆.

The concentration of sodium salt in the electrolyte composition may range from about 0.1 to 3.0 mol/L and preferably from about 0.5 to 2.0 mol/L.

As a particular embodiment of the invention, the electrolyte composition comprises:
- ethylene carbonate, propylene carbonate, dimethyl carbonate, with a ratio of 1:1:1 by volume (v/v),
- NaPF₆ in a concentration of 1 mol/L,
- NaODFB in an amount of 0.5 wt%, based on the total weight of the sodium salt and the solvent,
- TMSPi in an amount of 0.2 wt%, based on the total weight of the sodium salt and the solvent,
- Vinylene carbonate in an amount of 3.0 wt%, based on the total weight of the sodium salt and the solvent,
- Succinonitrile in an amount of 3.0 wt%, based on the total weight of the sodium salt and the solvent.

As a particular embodiment of the invention, the electrolyte composition comprises:
- ethylene carbonate, propylene carbonate, dimethyl carbonate, with a ratio of 1:1:1 by volume (v/v),
- NaPF₆ in a concentration of 1 mol/L,
- NaODFB in an amount of 0.5 wt%, based on the total weight of the sodium salt and the solvent,
- TMSPi in an amount of 1 wt%, based on the total weight of the sodium salt and the solvent,
- Vinylene in an amount of 3.0 wt%, based on the total weight of the sodium salt and the solvent,
- Succinonitrile in an amount of 3.0 wt%, based on the total weight of the sodium salt and the solvent.

As a particular embodiment of the invention, the electrolyte composition comprises:
- ethylene carbonate, propylene carbonate, dimethyl carbonate, with a ratio of 1:1:1 by volume (v/v),
- NaPF₆ in a concentration of 1 mol/L,
- NaODFB in an amount of 0.5 wt%, based on the total weight of the sodium salt and the solvent,
- TMSPi in an amount of 0.2 wt%, based on the total weight of the sodium salt and the solvent,
- Vinylene in an amount of 3.0 wt%, based on the total weight of the sodium salt and the solvent,
- Succinonitrile in an amount of 3.0 wt%, based on the total weight of the sodium salt and the solvent.

As a particular embodiment of the invention, the electrolyte composition comprises:
- ethylene carbonate, propylene carbonate, ethyl methyl carbonate, with a ratio of 1:1:1 by volume (v/v),
- NaPF₆ in a concentration of 1 mol/L,
- NaODFB in an amount of 0.5 wt%, based on the total weight of the sodium salt and the solvent,
- TMSPi in an amount of 0.2 wt%, based on the total weight of the sodium salt and the solvent,
- Vinylene in an amount of 3.0 wt%, based on the total weight of the sodium salt and the solvent,
- Succinonitrile in an amount of 3.0 wt%, based on the total weight of the sodium salt and the solvent.

As a particular embodiment of the invention, the electrolyte composition comprises:
- ethylene carbonate, propylene carbonate, diethyl carbonate, with a ratio of 1:1:1 by volume (v/v),
- NaPF₆ in a concentration of 1 mol/L,
- NaODFB in an amount of 0.5 wt%, based on the total weight of the sodium salt and the solvent,
- TMSPi in an amount of 0.2 wt%, based on the total weight of the sodium salt and the solvent,
- Vinylene in an amount of 3.0 wt%, based on the total weight of the sodium salt and the solvent,
- Succinonitrile in an amount of 3.0 wt%, based on the total weight of the sodium salt and the solvent.

The invention also relates to the use of the electrolyte composition as defined above, as a non-aqueous liquid electrolyte in a Na-ion battery. In a preferred embodiment, the first cycle of charge is carried out at a temperature from 25°C to 70°C, in particular 55°C. Especially, the temperature used for the first charge is equal or higher, preferably higher, than the one used for the subsequent charges, in order to obtain a more stable SEI.

Finally, the invention relates to a Na-ion battery comprising:
- at least one positive electrode comprising at least one positive electrode active material and a current collector;
- at least one negative electrode comprising a negative electrode active material and a current collector; and
- at least one separator impregnated with a non-aqueous liquid electrolyte, said separator being placed between said positive electrode and said negative electrode;
wherein said non-aqueous liquid electrolyte is an electrolyte composition as defined above.

The positive electrode active material is a material capable of inserting sodium ions reversibly which may be chosen among oxides such as NaₓMO₂ in which M represents at least one metallic element selected from the group comprising Ni, Co, Mn, Fe, Cr, Ti, Cu, Zn, V, Al and Mg; and among phosphates such as NaTi₂(PO₄)₃, Na₃V₂(PO₄)₃, Na₃V₂(PO₄)₂F₃, Na₂MnP₂O₇, Na₂MnPO₄F, Na_{1.5}VPO_{4.8}F_{0.7} and/or NaV*₁₋ₓ*Cr*ₓ*PO₄F. Among these positive electrode active materials, Na₃V₂(PO₄)₂F₃, also named NVPF, Na_{2/3}Mg_{1/3}Mn_{2/3}O₂, and a mixture thereof, are particularly preferred.

In addition to the positive electrode active material, the positive electrode may further include a polymer binder and optionally an electronic conducting agent.

As an example of suitable polymer binders, a mention may be made of polyvinylidene difluoride (PVdF), poly(tetrafluoroethylene) (PTFE), cellulose fibers, cellulose derivatives such as starch, carboxymethyl cellulose (CMC), diacetyl cellulose, hydroxyethyl cellulose or hydroxypropyl cellulose, styrene butadiene rubber (SBR) and a mixture thereof. Among these binders, PVdF is preferred.

The conductive agent may be carbon black, Super P carbon black, acetylene black, ketjen black, channel black, natural or synthetic graphite, carbon fibers, carbon nanotubes, vapor grown carbon fibers or a mixture thereof.

The proportions, relatively to the total weight of the positive electrode, are preferably:
- Positive electrode active material: 80 to 98 wt.%
- Electronic conducting agent: 1 to 10 wt.%
- Polymer binder: 1 to 10 wt.%.

The negative electrode active material used for the negative electrode can be selected among carbon materials, in particular hard carbon, soft carbon, carbon nanofibers or carbon felt, antimony, tin, and phosphorus.

According to a preferred embodiment of the present invention, the negative electrode active material is a carbon material and said negative electrode further comprises a polymer binder which may be chosen among the same polymer binders as those mentioned above for the positive electrode, and preferably from PVdF or cellulose derivatives binders.

As mentioned for the positive electrode, the negative electrode may further include a conductive agent which may be chosen among the same conductive agent as those mentioned above for the positive electrode.

The positive and/or negative electrode may also include a current collector.

The current collectors of the positive and/or negative electrodes may comprise an electron conductive material, more particularly a metallic material which may be selected from the group consisting of aluminum, copper, nickel, titanium, steel and their alloys.

The separator may be a conventional polymer-based separator including polypropylene and/or polyethylene such as a Celgard^{®} separator or glass fibers, such as a Whatman^{®} borosilicate glass fiber separator, or a cellulose-based separator, such as a Dreamweaver^{®} nonwoven nanofiber separator.

A Na-ion battery according to the invention may comprise a single electrochemical cell comprising two electrodes (i.e. one positive electrode and one negative electrode) separated by an electrolyte; or of a plurality of chemical cells assembled in series; or of a plurality of chemical cells assembled in parallel; or of a combination of the two assembly types.

### Legend to the Figures

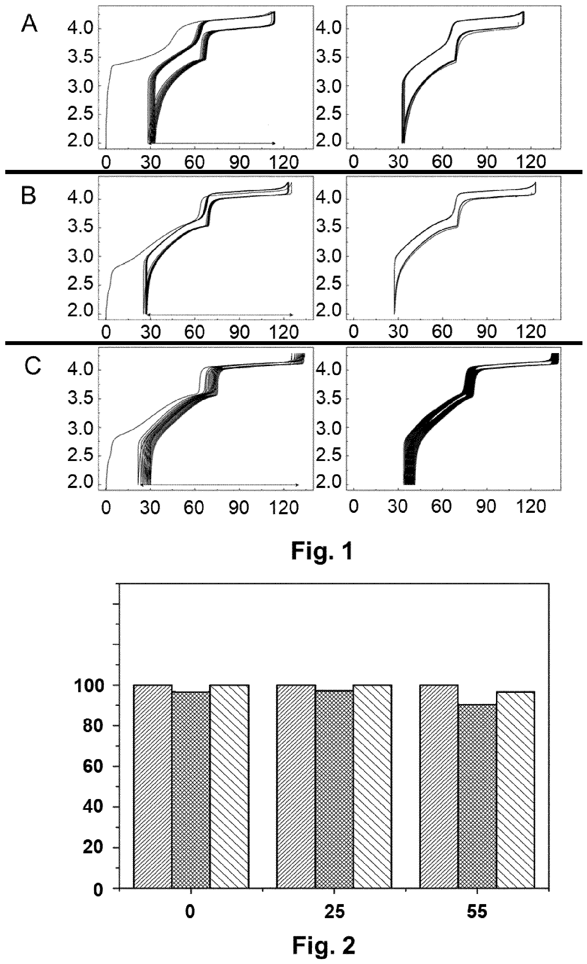

**Figure 1** gives the evolution of the voltage (V) as a function of capacity (in mAh.g⁻¹ based on the positive electrode active material mass) for a Na-ion battery comprising an electrolyte composition EC3 according to the invention as non-aqueous liquid electrolyte. **Figure 1A** is performed at 0°C. **Figure 1B** is performed at 25°C. **Figure 1C** is performed at 55°C. For **Figures 1A, 1B** and **1C** the left graph represents the 10 first cycles of the test protocol, and the right graph represents the 10 last cycles of the test protocol. On each left graph, the double arrow represents the delta between the lower and the higher capacity value (**Figure 1A****:** 83.3 mAh.g⁻¹; **Figure 1B**: 96.1 mAh.g⁻¹; **Figure 1C****:** 104 mAh.g⁻¹).
**Figure 2** represents the discharge capacity (%) at different temperatures (°C) for a Na-ion battery comprising an electrolyte composition EC3 according to the invention as non-aqueous liquid electrolyte. For each temperature, the left bar represents the discharge capacity of the (n-1)^{th} cycle before self-discharge (Qₙ₋₁), the middle bar represents the discharge capacity at self-discharge (n^{th} cycle, Qₙ), and the right bar represents the discharge capacity of (n+1)^{th} cycle after self-discharge (Qₙ₊₁).

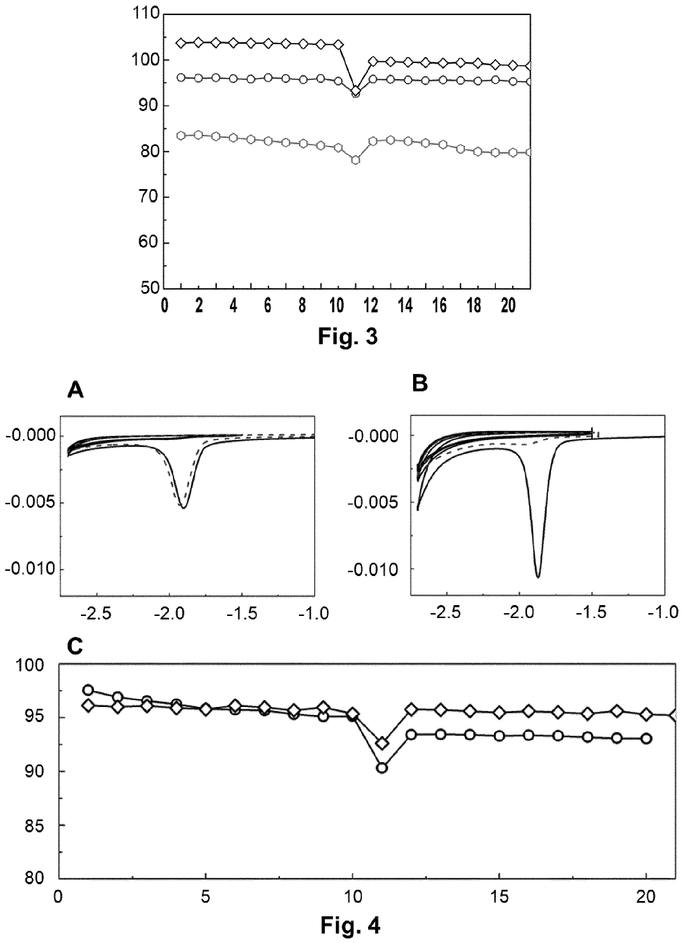

**Figure 3** represents the discharge capacity (in mAh.g⁻¹ based on the positive electrode active material mass) as a function of the cycles. Diamond symbols represent the results obtained at 55°C. Hollow circle symbols represent the results obtained at 25°C. Hexagon symbols represent the results obtained at 0°C.
**Figure 4** represents the impact of the stability of SEI for a Na-ion battery comprising an electrolyte composition EC3 according to the invention as a non-aqueous liquid electrolyte. Figures 4A and 4B are cyclic voltammograms (current (Ampere) in y-axis and potential (volt vs Ag⁺/Ag) in x-axis), carried out at two conditions, 25°C (**Figure 4A**) and 55°C (**Figure 4B**), where the solid line represents the first five cycles carried out at 100 mV/sec with a voltage range from 1.7 to 0 volt vs Na⁺/Na (corresponding to -1 to -2.7 volts vs Ag⁺/Ag). The dotted lines represent the 6^{th} cycle after self-discharge at 1.7 V for 5 minutes. **Figure 4C** represents the discharge capacity (in mAh.g⁻¹ based on the positive electrode active material mass) as a function of the cycles. Diamond symbols represent the results obtained at 25°C with a first cycle carried out at 55°C. Hollow circle symbols represent the results obtained at 25°C for all (first and subsequent) cycles.

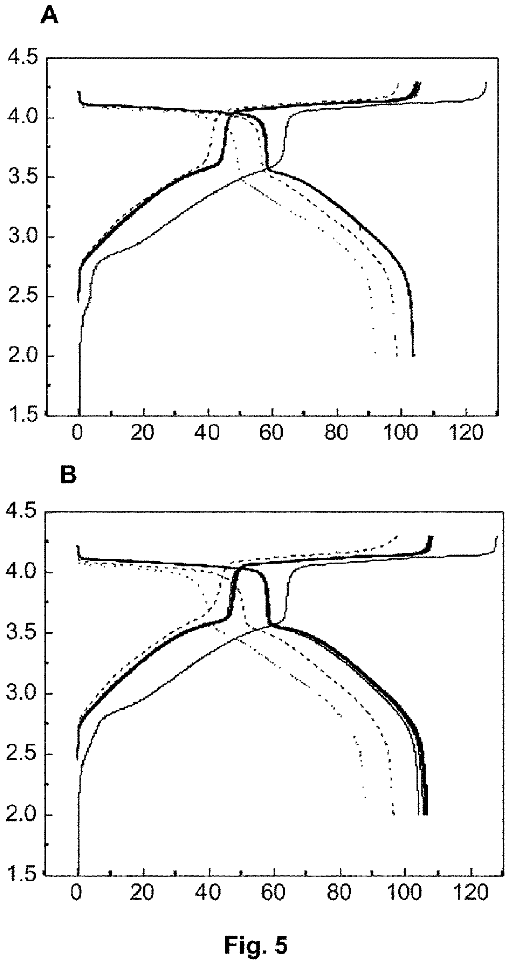

**Figure 5** gives the evolution of the voltage (V) as a function of capacity (in mAh.g⁻¹ based on the positive electrode active material mass) for a Na-ion battery comprising an electrolyte composition EC3 according to the invention as a non-aqueous liquid electrolyte (**Figure 5A**) and for a Na-ion battery comprising an electrolyte composition EC1 (comparative) as a non-aqueous liquid electrolyte (**Figure 5B**). The results are obtained at 55°C. In both **Figure5A** and **Figure 5B** the solid line represents the 10 firsts cycles, the dotted line represents the discharge curve after self-discharge at 4.3 V (n^{th} cycle) and the dashed line represent the recovery (n+1)^{th} cycle.

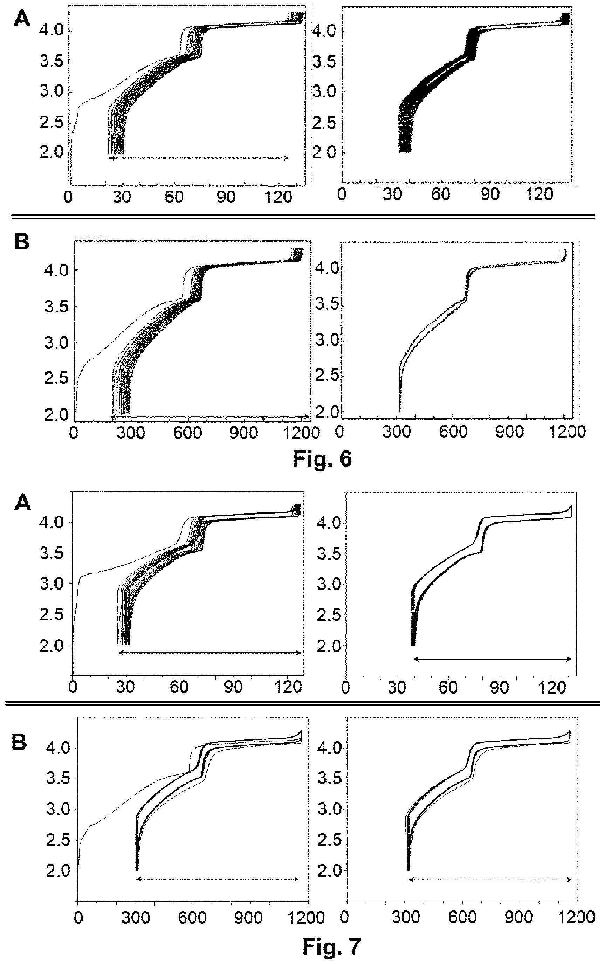

**Figure 6** gives the evolution of the voltage (V) as a function of capacity (in mAh.g⁻¹ for **6A** and in mAh for **6B**), based on the positive electrode active material mass) for two types of Na-ion battery comprising an electrolyte composition EC3 according to the invention as non-aqueous liquid electrolyte. The results are obtained at 55°C. **Figure 6A** corresponds to **Figure 1C****.** **Figure 6B** corresponds to a 18650 cell. Left graph represents the 10 first cycles of the test protocol before self-discharge, and the right graph represents the 12-21 cycles of the test protocol after self-discharge at 4.3 V for one week. The double arrow on the left graph of **Figure 6B** represents the delta between the lower and the higher capacity value (945 mAh for first 10 cycles and 915 mAh for 12-21 cycles).
**Figure 7** gives the evolution of the voltage (V) as a function of capacity (in mAh.g⁻¹ based on the positive electrode active material mass) for two types of Na-ion battery comprising an electrolyte composition EC3 according to the invention as non-aqueous liquid electrolyte. The results are obtained at 25°C. **Figure 7A** corresponds to **Figure 1B**. **Figure 7B** corresponds to a 18650 cell. Left graph represents the 10 first cycles of the test protocol before self-discharge test, and the right graph represents the 12-21 cycles of the test protocol after self-discharge at 4.3V for one week. The double arrow on each graph of **Figure 7B** represents the delta between the lower and the higher capacity value (850 mAh for first 10 cycles and 840 mAh for 12-21 cycles).

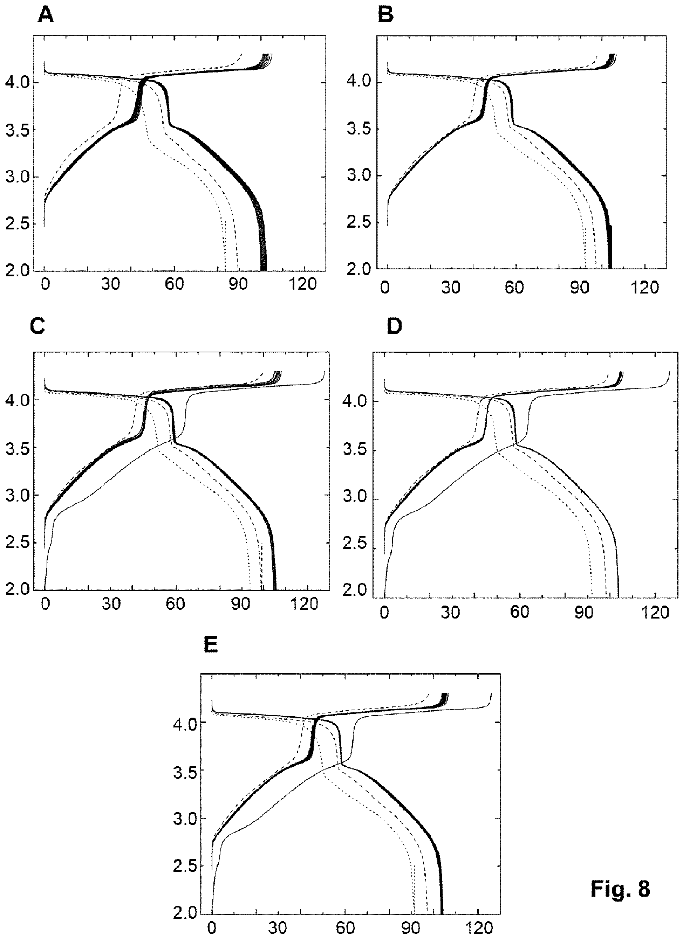

**Figure 8** gives the evolution of the voltage (V) as a function of capacity (in mAh.g⁻¹ based on the positive electrode active material mass) for Na-ion batteries Na-B3 (**Figure 8A**), Na-B4 (**Figure 8B**), Na-B2 (**Figure 8C**), Na-B5 (**Figure 8D**) and Na-B6 (**Figure 8E**). The results are obtained at 55°C. In each figure, the solid line represents the first 10 cycles (1 to (n-1) cycles), the dotted line represents the discharge curve at cycle n after self-discharge test at 4.3V for one week and the dashed line represent the recovery (n+1)^{th} cycle.

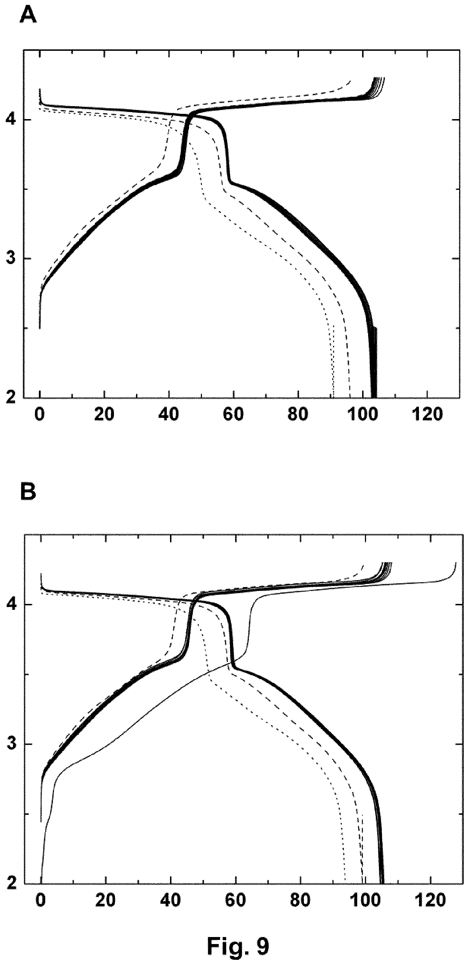

**Figure 9** gives the voltage (V) as a function of capacity (in mAh.g⁻¹ based on the positive electrode active material mass) for a Na-ion batteries Na-B7 (**Figure 9A**) and Na-B2 (**Figure 9B**). The results are obtained at 55°C. On each figure, the solid line represents the first 10 cycles, the dotted line represents the discharge curve after self-discharge test (n^{th} cycle) and the dashed line represent the recovery (n+1)^{th} cycle.

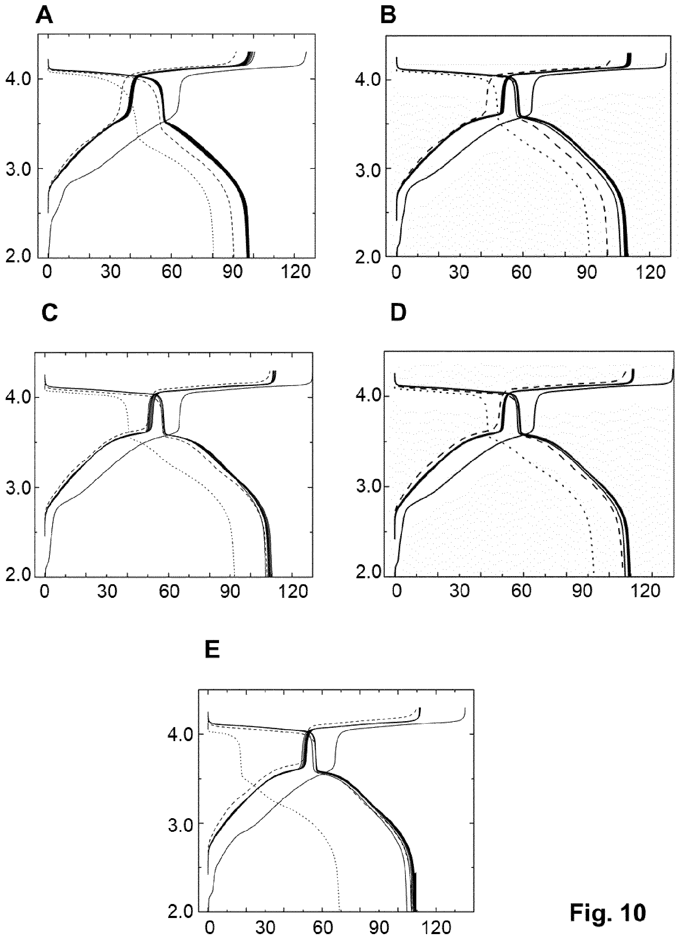

**Figure 10** gives the evolution of the voltage (V) as a function of capacity (in mAh.g⁻¹ based on the positive electrode active material mass) for Na-ion batteries Na-B8 (**Figure 10A**), NaB9 (**Figure 10B**), Na-B10 (**Figure 10C**), Na-B11 (**Figure 10D**) and Na-B12 (**Figure 10E**). The results are obtained at 55°C. In each figure, the solid line represents the first 10 cycles, the dotted line represents the discharge curve after self-discharge test (n^{th} cycle) and the dashed line represent the recovery (n+1)^{th} cycle.

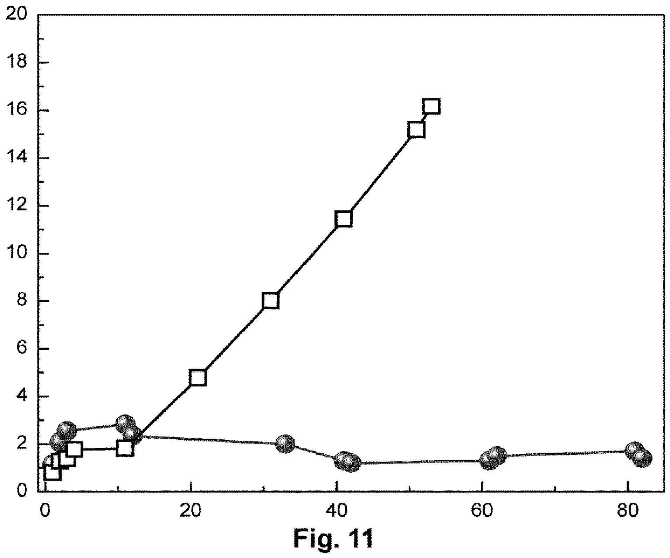

**Figure 11** gives the evolution of the pressure inside Na-ion 18650 cells with electrolyte solutions EC1 (hollow square, comparative) and EC3 (solid round, invention) as function of cycle of charge/discharge. The data were collected by cycling the corresponding 18650 cells at 55 °C

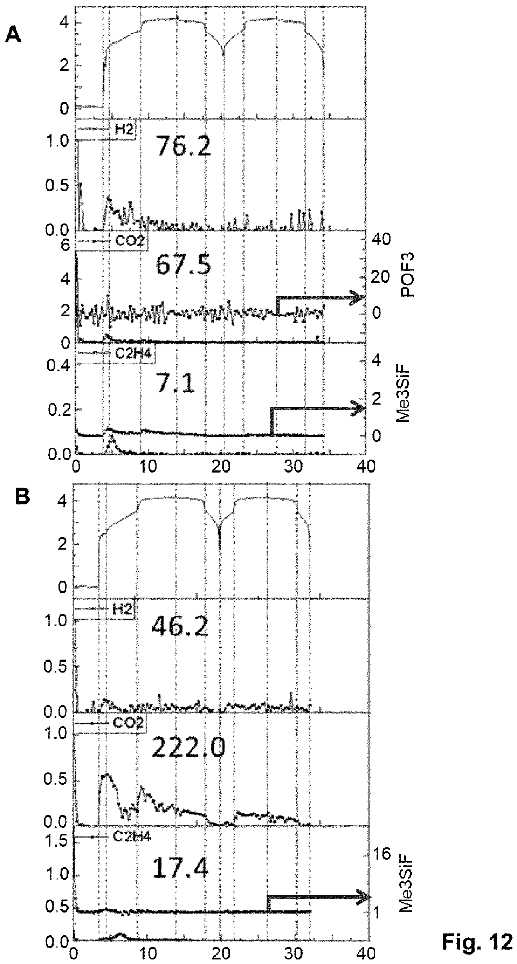

**Figure 12** gives the amount (relative abundance) of gases upon cycling time (minutes) for a swagelok type cell with electrolyte solution EC4 (**Figure 12A**) and for a swagelok type cell with electrolyte solution EC1 (**Figure 12B**) at 25°C. The top panel for **Figure 12A** and **Figure 12B** represents the evolution of voltage (V) as a function of time (minutes). The bottom three panels for **Figure 12A** and **Figure 12B** gives the relative abundance of different gases: H₂ (76.2; 46.2), CO₂ (67.5; 222), POF₃ (almost nil for both), ethylene (C₂H₄) (7.1; 17.4) and fluorotrimethylsilane (Me₃SiF)(5; 15) as function of time (minutes). The arrows indicate which curve has the right Y-axis.

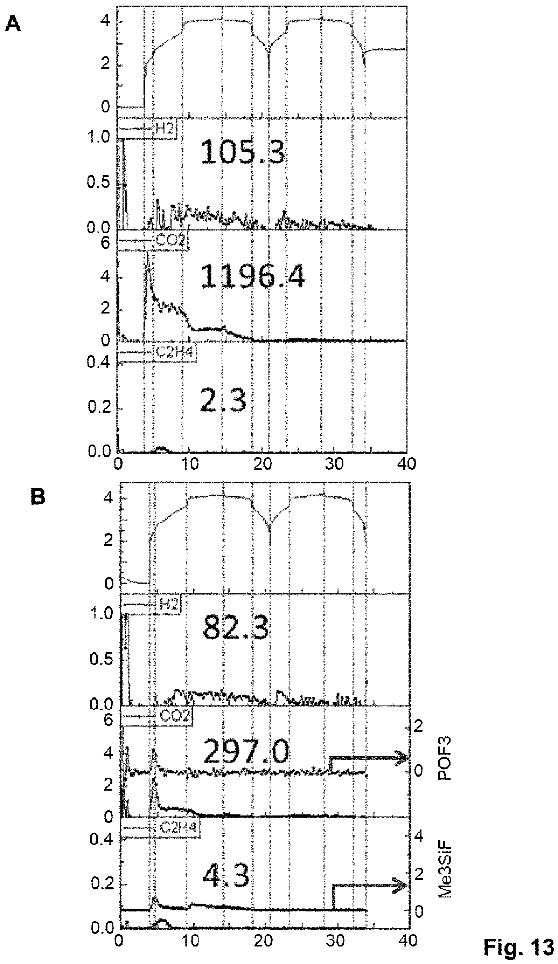

**Figure 13** provides the amount (relative abundance) of gases upon cycling time (minutes) for a swagelok type cell with electrolyte solution EC2 (**Figure 13A**) and for a swagelok type cell with electrolyte solution EC3 (**Figure 13B**) at 55°C. The top panel for **Figure 13A** and **Figure 13B** represents the evolution of voltage (V) as a function of time (minutes). The bottom three panels for for **Figure 13A** and **Figure 13B** gives the relative abundance of different gases: H₂ (105.3; 82.3), CO₂ (1196.4; 297), POF₃ (none; 100), C₂H₄ (2.3;4.3) and fluorotrimethylsilane (Me₃SiF) (none; 43) as function of time (minutes). The arrows indicate which curve has the right Y-axis.

### EXAMPLES

### Example 1: Preparation of electrolyte compositions

### 1. Preparation of EC-PC-DMC mixtures

Four electrolyte composition (EC1 to EC4) were prepared by mixing
- a solvent: ethylene carbonate (EC) - propylene carbonate (PC) - dimethyl carbonate (DMC) with a ratio of 1:1:1 by volume (v/v),
- a salt: 1 M of NaPF₆, and
- additives.

The additives of compositions EC1 to EC4 are given in the following table (in wt% relatively to the total weight of the solvent and the salt):

| **Electrolyte Composition** | **NaODFB (wt%)** | **TMSPi (wt%)** | **vinylene carbonate (wt%)** | **succinonitrile (wt%)** |
|---|---|---|---|---|
| EC1 (comparative) | 0.5 | 1.0 | 3.0 | - |
| EC2 (comparative) | 0.5 | - | 3.0 | 3.0 |
| EC3 | 0.5 | 0.2 | 3.0 | 3.0 |
| EC4 | 0.5 | 1 | 3.0 | 3.0 |
| EC5 | 0.1 | 0.2 | 3.0 | 3.0 |
| EC6 | 0.3 | 0.2 | 3.0 | 3.0 |
| EC7 | 0.4 | 0.2 | 3.0 | 3.0 |
| EC8 | 0.8 | 0.2 | 3.0 | 3.0 |
| EC9 | 0.5 | 0.2 | 3.0 | 1.0 |

EC1 to EC9 were prepared according to the same method described hereafter wherein the mass of the additives was adapted for each electrolyte solution.

In detail for EC3, 1 mL of EC (Dodochem^{®}), 1 mL of PC (Dodochem^{®}) and 1 mL DMC (Dodochem^{®}) were added to a vial and mixed. The mass of the solvent was 3.59 g (1.32 g EC + 1.2 g PC + 1.07 g DMC). Subsequently, it was added 0.504 g of NaPF₆ (Stella^{®}) to reach the 1M of concentration. The total mass of this mixture was then 4.1g. Accordingly, it was further added 123 mg of succinonitrile (Aldrich^{®}), 123 mg of vinylene carbonate (Aldrich^{®}), 21 mg of NaDFOB (Aldrich^{®}) and 8 mg of TMSPi (Aldrich^{®}). Succinonitrile is a waxy solid at room temperature (melting point at around 60°C), and was first heated to 70°C allowing the appropriate mass to be extracted using a Pasteur pipet.

### 2. Preparation of other electrolyte mixtures

Other electrolyte solutions were also prepared (EC10 to EC14). These electrolyte solutions comprise the same additives and salt that EC3 but have a different solvent composition, as given by the below table. EC10 to EC14 were prepared with the same method described above for EC3 but with the adequate solvent (ethyl methyl carbonate, diethyl carbonate and diglyme from sigma aldrich^{®}).

| **Electrolyte Composition** | **Solvent** | | |
|---|---|---|---|
| EC10 | ethylene carbonate | propylene carbonate | ethyl methyl carbonate |
| | volume ratio: 0.25:0.25:0.5 | | |
| EC11 | ethylene carbonate | propylene carbonate | ethyl methyl carbonate |
| | volume ratio: 1:1:1 | | |
| EC12 | ethylene carbonate | propylene carbonate | dimethyl carbonate |
| | volume ratio: 0.25:0.25:0.5 | | |
| EC13 | ethylene carbonate | propylene carbonate | diethyl carbonate |
| | volume ratio: 1:1:1 | | |
| EC14 | ethylene carbonate | propylene carbonate | diglyme |
| | volume ratio: 0.25:0.25:0.5 | | |

### Example 2: Electrochemical performances on Na-ion batteries

### 1. Preparation of 2032 type coin cells

Electrochemical performances of electrolyte compositions EC1, and EC3, EC5 to EC14 were tested in coin cells having the following configuration.

The positive electrode was prepared by mixing Na₃V₂(PO₄)₂F₃ (NVPF, mass loading: 12.6 mg/cm²), with polyvinylidinefluoride (PVdF, 3.0 wt.%) and carbon black (3.0 wt. %). The resulting mixture was dispersed in N-methylpyrrolidine (NMP) to form a homogeneous slurry, which then was casted onto a current collector made of an aluminum foil. The positive electrode was dried at 120°C and then pressed by a roller machine.

The negative electrode was prepared by mixing hard carbon (mass loading 6.1 mg/cm²) with PVdF (3.0 wt.%) and carbon black (3.0 wt. %). The resulting mixture was dispersed in N-methylpyrrolidine (NMP) to form a homogeneous slurry, which then was casted onto a current collector made of an aluminum foil. The positive electrode was dried at 120°C and then pressed by a roller machine.

The positive electrode and the negative electrode were cut into circular disc of 13 mm diameter and dried at 80°C under vacuum (less than 100 mbar) for 24 hours. A separator (glass fiber separator Whatman^{®}, GF/D) is soaked with 15-16 drops of one electrolyte composition from EC1, and EC3, EC5 to EC14. Then, the 2032 type coin cells were assembled in Argon atmosphere by stacking on a positive can the positive electrode, the separator, the negative electrode, a metal disc to provide pressure, a metal spring to provide homogenous pressure and sealed with a negative can, where water and oxygen content is less than 1 ppm. The 2032 type coin cells containing the electrolyte compositions EC1, and EC3, EC5 to EC14 correspond to Na-ion batteries Na-B1 to Na-B12, respectively, and correspondences are given in the table below:

| **2032 type coin cell** | **Electrolyte composition** |
|---|---|
| Na-B1 (comparative) | EC1 |
| Na-B2 | EC3 |
| Na-B3 | EC5 |
| Na-B4 | EC6 |
| Na-B5 | EC7 |
| Na-B6 | EC8 |
| Na-B7 | EC9 |
| Na-B8 | EC10 |
| Na-B9 | EC11 |
| Na-B10 | EC12 |
| Na-B11 | EC13 |
| Na-B12 | EC14 |

### 2. Self-discharge and cycling test procedure

The whole process was carried out at fixed temperature (55/ 25/ 0 °C), with a voltage range of 2.0 to 4.3 V.

The test procedure included the following steps:
1. After assembling, the Na₃V₂(PO₄)₂F₃/hard carbon full cells Na-B1 to Na-B12 were charged-discharged for 10 cycles at C/5 (1C= 128 mA.g⁻¹). The tenth cycle is considered to be the n-1^{th} cycle for the purpose below. Whatever the temperature used for the others cycles is, the first cycle is carried out at 55°C.
2. The cell was charged to 4.3 V (100 % stage of charge (SoC)), then it was rested for 7 days without applying current but monitoring the voltage, followed by discharging the cell to 2.0 V. The whole cycle was denoted as self-discharge cycle and considered to be the n^{th} cycle for the purpose below.
3. Then, the cell was charged and discharged at C/5 for 10 more cycles, which was called as recovery. The first cycle of this round is considered to the n+1^{th} cycle for the purpose below.

The capacity (Q) of the 2032 type coin cell is calculated at the end (discharge) of the n-1^{th} cycle, the n^{th} cycle and the n+1^{th} cycle. The ratio ((Qₙ₋₁-Qₙ)*100)/Qₙ₋₁ gives the capacity loss on self-discharge (in percentage) of the coin cell. The recovered capacity (in percentage) of the coin cell is calculated as the ratio (Qₙ₊₁*100)/ Qₙ₋₁.

### 3. Electrochemical performances of the Na-ion battery Na-B2

The charges/discharges curves of Na-ion battery Na-B2 at temperature 0°C, 25°C and 55°C are represented in **Figures 1A** and **1B****.**

As shown, at temperatures 0°C and 25°C, the charges/discharges curves for cycles 1 to 10 and cycles 12 to 21 overlap on each other. Accordingly, the recovered capacity is near 100%. Hence, at these temperatures there is no slippage in capacity showing the absence of parasitic reaction in positive and negative electrode, and therefore indicates the formation of stable solid electrolyte interphase (SEI) and cathode electrolyte interphase (CEI).

At temperature 55°C, the one-week resting period at full SoC causes only a slight capacity loss of 3%. This confirms the remarkable stability of SEI even at extreme conditions such as high temperature, which contribute to minimizing side reactions and thus preventing the consumption of the active materials (electrolyte, electrode materials etc.).

**Figure 2** gives the discharge capacity (in percentage) of Na-ion battery Na-B2 at different times (before self-discharge (Qₙ₋₁), at self-discharge (Qₙ) and after self-discharge (Qₙ₊₁)) for the different temperatures (0°C, 25°C and 55°C). At 0°C and 25°C, Na-ion battery Na-B2 shows a very low capacity loss during self-discharge (3%) and a 100% capacity recovery ability after 1 week of self-discharging (Qₙ₊₁). At 55°C, Na-ion battery Na-B2 shows a low capacity loss during self-discharge (10%) and a very good capacity recovery (97%).

The value of discharge capacity of Na-ion battery NA-B2 is shown at **Figure 3****.** As expected, increase in temperature increases the value of the discharge capacity of the Na-ion battery Na-B2. During cycles 1 to 10 and 12 to 21, this value is quite stable at the different temperatures (low decrease at 0°C). Cycle 11 (self-discharging) shows a decreased discharge capacity for all temperatures, which is then increased at cycle 12 to the discharge capacity value at cycle 9 (0°C and 25°C), or is then increased at cycle 12 to quite the discharge value at cycle 9 (55°C). This reflects the discharge capacity percentage gave at **Figure 2****.**

Importance to carry out the first cycle at high temperature (from room temperature to 70°C) is shown through **Figure 4. Figures 4A** and **4B** show cyclic voltammograms of Na-ion battery carried out a 25°C and 55°C. The solid line shows the first five cycles where the formation of stable SEI is observed by the appearance of strong redox peak in the first cycle (-0.005 V at 25°C and -0.010V at 55°C) and its disappearance in the consecutive cycles wherein the current value is near zero. Consequently, the surface is passivated during the first cycle in both conditions, 25°C and 55°C. The 6^{th} cycle of self-discharge shows interestingly different results for these conditions. Where a strong reduction peak appears at 25°C (same value than for the first cycle), there is no peak value at 55°C and in contrast a current value near zero. This result indicates better stability of the formed passivation layer when it is formed at 55°C than at 25°C. **Figure 4C** shown the impact of a stability of the SEI on self-discharge end recovery ability from different temperatures used at the first cycle (25°C vs 55°C). As shown on this figure, discharge capacity is higher at self-discharge (Qₙ) and after self-discharge (Qₙ₊₁) when the first cycle is carried out at 55°C.

Bring together, these results show that Na-ion battery Na-B2 enables to achieve very good cycling performances at the nominal temperature for the battery to be used (0°C and 25°C) as well as at high temperature (55°C).

The inventors then compared the electrochemical performance between Na-ion batteries Na-B1 (comparative) and Na-B2 (invention) at 55°C (**Figure 5**). As shown, the capacity recovery after self-discharge for Na-B1 is of 91% while this value is of 97% for Na-B2. Hence, adding succinonitrile to the combination of additives of EC1 leads unexpectedly to higher capacity retention capability.

The inventors also compared the electrochemical performance between 2032 coin type cell and 18650 cell (see Example 3 for composition) both containing electrolyte composition EC3. The test procedure was applied in both cases (with 1C= -1200 mAh.g⁻¹ for the 18650 cell). The charge/discharge curves at 55°C are represented on **Figure 6****.** As shown, the cycling performances are very similar, with a capacity recovery after self-discharging of 97% in both cases. **Figure 7** gives the compared electrochemical performance at 25°C. Here also, the cycling performances are very similar, with a capacity recovery after self-discharging of 97% in both cases. Brought together, these results show that electrolyte composition EC3 enables to achieve very good cycling performances in different cell type and at the nominal temperature for the battery to be used (25°C) as well as at high temperature (55°C).

### 4. Impact of NaODFB amount on electrochemical performance of Na-ion batteries of the invention (Na-ion batteries Na-B2 to Na-B6)

The inventors tested different amounts of NaODFB in 2032 type coin cells and their impact on electrochemical performances. The electrochemical performances of Na-ion batteries NaB2 to Na-B6 are represented on Figure 7. The capacity loss and the recovered capacity for each Na-ion battery are given in the table below (ranked by increased NaODFB amount).

| **Na-ion battery** | **Capacity loss (%)** | **Recovered capacity (%)** |
|---|---|---|
| Na-B3 | 16 | 89 |
| Na-B4 | 10.5 | 94 |
| Na-B2 | 11.6 | 95 |
| Na-B5 | 10.3 | 95 |

| | | |
|---|---|---|
| Na-B6 | 11.2 | 95 |

From these results, one can conclude that all the Na-ion batteries Na-B2 to NB6 show very good electrochemical performances, and that the increasing the amount of NaODFB above 0.3 wt% has little impact on capacity loss and recovered capacity. Further, the inventors found that 0.5 wt% of NaODFB is the optimal quantity needed for the electrolyte formulation. Indeed, usage of lesser NaODFB results in less efficient formation of SEI (eg. Na-B3 with 0.1% NaODFB) and usage of higher amount of NaODFB results in increase in cell impedance due to the growth of thicker SEI.

### 5. Impact of succinonitrile amount on electrochemical performance of Na-ion batteries of the invention (Na-ion batteries Na-B2 and Na-B8)

The inventors tested different amounts of succinonitrile in 2032 type coin cells and their impact on electrochemical performances. The electrochemical performances of Na-ion batteries Na-B2 and Na-B8 are represented on **Figure 9****.** The capacity loss and recovered capacity for each Na-ion battery are given in the table below.

| Na-ion battery | Capacity loss (%) | Recovered capacity (%) |
|---|---|---|
| Na-B2 | 10 | 95 |
| Na-B8 | 11.3 | 93 |

Form this result, usage of 3 wt% of succinonitrile gives the better electrochemical performances.

### 6. Impact of linear carbonates on electrochemical performance of Na-ion batteries of the invention (Na-ion batteries Na-B8 to Na-B12)

The inventors tested different solvent compositions with different linear carbonate or a different ratio with DMC (Na-B10) for the electrolyte composition of Na-ion batteries. The electrochemical performances of Na-ion batteries Na-B8 to Na-B12 are represented on **Figure 10****.** The capacity loss and recovered capacity for Na-ion batteries Na-B8 to Na-B12 are given in the table below.

| **Na-ion battery** | **Capacity loss (%)** | **Recovered capacity (%)** |
|---|---|---|
| Na-B8 | 86 | 100 |
| Na-B9 | 84 | 93 |
| Na-B10 | 83.4 | 93 |
| Na-B11 | 84.4 | 97 |
| Na-B12 | 66 | 100 |

Na-ion batteries Na-B8 to Na-B12 achieved very good cycling performances.

### Example 3: Gaseous formation study

### 1. Pressure study on commercial 18650 cell

The usage of huge amount of electrode active material and electrolyte is a major reason for the production of large amount of gaseous bi-product in 18650 cells compared to 2032 coin cell or Swagelok type cells (see below). Hence the 18650 cells are specifically used to follow the pressure changes upon cycling.

The electrolyte solutions EC1 (comparative) and EC3 (invention) were implemented into a Na-ion 18650 cell (TIAMAT) composed of a Na₃\/₂(PO₄)₂F3 cathode and a pre-sodiated hard carbon anode. The mass loading of the Na₃V₂(PO₄)₂F₃ and hard carbon were exactly same as used for 2032 coin type cells, namely around12 mg/cm² for Na₃V₂(PO₄)₂F₃ and around 6 mg/cm² for hard carbon with positive to negative active material weight ration of 2:1. The total amount of the active material used in 18650 cell is around 9.5 g of Na₃V₂(PO₄)₂F₃ (around 15 mg in 2032coin cells). The positive and negative electrodes are coated on both sides of the Aluminium foil and they are wind together using celgard separator to separate them physically. The winded electrodes with separator is then placed in cylindrical type cans with size of 18mm diameter and 65mm length and filled with electrolyte under study. Nearly 6g of electrolyte is used for each cell and the can is sealed using a cap.

The pressure analyses in 18650 cell is carried out in home-made experimental set up where an optical fibre is placed in the 18650 cell that follow the pressure changes upon cycling. Cycling of charge and discharge was proceeded at 55°C with a voltage range of 2.0 to 4.3 V.

The inventors measured the pressure inside the cell during the cycling, which is reported on **Figure 11****.** As shown on this figure, the pressure inside the Na-ion cell with EC1 increased constantly upon cycling with a severe evolution after 10 cycles. The pressure reached 16 bars after approximately 55 cycles and triggered the break of the circuit interrupt device (CID) of the cell. On the contrary, the pressure inside the Na-ion cell with EC3 had a low increase to approximately 3 bar within the first 5 cycles wherein it reached a plateau with a very less, if any, pressure evolution upon cycling. These results show that solely the electrolyte of the invention enables to keep at a low level the pressure inside a commercial cell.

The inventors studied by gas chromatography coupled with mass spectrometry the gases involved in this increased pressure with the use of electrolyte solution EC1. The main gases found were CO₂ and fluoromethysilane (a by-product of TMSPi reaction).

### 2. Analytical data of gaseous by-product formation

The inventors tested different combinations of additives and compared the level of gaseous by-product formation during cycling. To this aim, the electrolyte solutions EC1, EC2, EC3 and EC4 were used into home-made swagelok type cells which were directly connected to a mass spectrometer in order to study all the formed gases. The positive and negative electrodes were self-standing film using polytetrafluoroethylene (PTFE) binder (10% by weight to a mixture of active material and conducting carbon in the ratio 85: 15). The cells were cycled at C/10 rate (1C= 128 mAh.g-1). The results of the electrochemical mass spectrometry analyses are represented on **Figures 12** and **13****.**

**Figure 12** shows gas emissions in swagelok type cells with electrolyte solution EC1 and the swagelok type cell with electrolyte solution EC4 at 25°C. EC1 and EC4 electrolyte compositions only differ in that EC4 further comprises succinonitrile. As shown on this figure, the overall amount of gaseous by-products formed is decreased with EC3, showing the impact of succinonitrile in the reduction of gaseous by-products.

**Figure 13** compared the gaseous by-products in a swagelok-type cell with an electrolyte composition EC2 and a swagelok-type cell with an electrolyte composition EC3 at 55°C. EC2 and EC3 electrolyte solutions differ from one another in that EC3 comprises added TMSPi As shown on this figure, the amount of each gaseous by-products is decreased when EC3 is used. This result shows that there is a synergic effect between succinonitrile and TMSPi which decreases the formation of gaseous by-products.

Altogether, **Figures 12** and **13** show that removing succinonitrile or TMPSi results in an increased level of gaseous by-product formation, and that combination of these two components is required to decrease the level of gaseous by-product.

### Example 4: Wettability of the electrolyte compositions of the invention

To evaluate the wetting ability of the electrolyte, the contact angle measurements of the electrolyte EC3 on a three layers PP/PE/PP film (Celgard^{®} separator) were performed by using KRUSS DSA100 device within 10 seconds. Firstly, the PP/PE/PP separator was placed onto the glass subtract flatly. Then, 10 µL of electrolyte was placed onto the surface of separator. Lastly, the camera in the KRUSS DSA100 device captures the image of the liquid onto the separator, and the contact angle was analysed.

Obviously, the EC3 can fully wet the PP/PE/PP separator.

## Claims

1. An electrolyte composition comprising at least one sodium salt dissolved in a solvent and a combination of additives, wherein:
- said solvent comprises at least one compound selected from the group consisting of ethylene carbonate, dimethyl carbonate, ethyl methyl carbonate, diethyl carbonate, propylene carbonate, ethyl acetate, ethyl propionate, methyl propionate, 4-fluorotoluene, 1,1,2,2-tetrafluoroethyl 2,2,3,3-tetrafluoropropyl ether, di-fluoro ethylene carbonate, ethyl difluoroacetate and diglyme, and
- the combination of additives comprises at least tris(trimethylsilyl)phosphite (TMSPi) and succinonitrile (SN).

2. The electrolyte composition according to claim 1, wherein the amount of TMSPi ranges from 0.05 to 10 wt%, based on the total weight of the sodium salt and the solvent.

3. The electrolyte composition according to claim 1 or 2, wherein the amount of SN ranges from 0.1 to 5 wt%, based on the total weight of the sodium salt and the solvent.

4. The electrolyte composition according to any one of claims 1 to 3, wherein the combination of additives further comprises at least one additional additive chosen in the group comprising: vinylene carbonate, vinylethylene carbonate and difluoro(oxalato)borate (NaODFB).

5. The electrolyte composition according to claim 4, wherein the amount of NaODFB ranges from 0.05 to 10 wt%, based on the total weight of the sodium salt and the solvent.

6. The electrolyte composition according to claim 4 or 5, wherein the amount of vinylene carbonate and/or the amount of vinylethylene carbonate each ranges from 0.1 to 10 wt%, based on the total weight of the sodium salt and the solvent.

7. The electrolyte composition according to any of claims 4 to 6, wherein the combination of additives comprises TMSPi, SN, NaODFB and vinylene carbonate.

8. The electrolyte composition according to any one of claims 1 to 7, wherein said solvent is a mixture of at least a first and a second compounds, said first compound being ethylene carbonate and said second compound being selected from the group consisting of dimethyl carbonate, ethyl methyl carbonate, diethyl carbonate, propylene carbonate, ethyl propionate, diglyme and 1,1,2,2-tetrafluoroethyl 2,2,3,3-tetrafluoropropyl ether.

9. The electrolyte composition according to claim 8, wherein said mixture of at least two compounds is a mixture of ethylene carbonate and propylene carbonate, preferably in a volume ratio of 1:1.

10. The electrolyte composition according to claim 9, wherein the solvent further comprises a third compound said third compounds being selected from the group consisting of dimethyl carbonate, ethyl methyl carbonate, diethyl carbonate, propylene carbonate, ethyl propionate, diglyme and 1,1,2,2-tetrafluoroethyl 2,2,3,3-tetrafluoropropyl ether.

11. The electrolyte composition according to claim 10, wherein said third compound is selected from the group consisting of dimethyl carbonate, ethyl methyl carbonate, diglyme and diethyl carbonate.

12. The electrolyte composition according to claims 1 to 7, wherein said solvent is a mixture of at least a first and a second compositions, said first composition being ethylene carbonate and/or propylene carbonate, and said second composition being selected from the group consisting of dimethyl carbonate, ethyl methyl carbonate, diethyl carbonate, ethyl propionate, diglyme, 1,1,2,2-tetrafluoroethyl 2,2,3,3-tetrafluoropropyl ether and mixture thereof.

13. The electrolyte composition according to any of claims 1 to 12, wherein the sodium salt is NaPF₆.

14. Use of the electrolyte composition according to any one of claims 1 to 13, as a non-aqueous liquid electrolyte in a Na-ion battery, preferably the first cycle of charge is carried out at a temperature from 25°C to 70°C.

15. A Na-ion battery comprising:
- at least one positive electrode comprising at least one positive electrode active material and a current collector;
- at least one negative electrode comprising a negative electrode active material; and
- at least one separator impregnated with a non-aqueous liquid electrolyte, said separator being placed between said positive electrode and said negative electrode;
wherein said non-aqueous liquid electrolyte is an electrolyte composition as defined in any one of claims 1 to 13.
